# FASCICULE DE BREVET EUROPEEN

(11) **EP 1 756 122 B1**
(45) Date de publication et mention de la délivrance du brevet: **05.08.2009**
(21) Numéro de dépôt: 05777214.7
(22) Date de dépôt: 14.06.2005
(51) Int. Cl.: C07F 7/14, C07F 7/20, C07F 15/00

(54) **PROCEDE DE PREPARATION D'UN OMEGA-HALOGENOALKYL DIALKYLHALOGENOSILANE**
VERFAHREN ZUR HERSTELLUNG EINES OMEGA-HALOALKYL-DIALKYLHALOSILANS
METHOD FOR PREPARING AN OMEGA-HALOALKYL DIALKYLHALOSILANE

(30) Priorité: 16.06.2004 FR 0406502
(43) Date de publication de la demande: 28.02.2007
(73) Titulaire: RHODIA CHIMIE, 92512 Boulogne Billancourt Cedex (FR)
(72) Inventeur: RAMDANI, Kamel, F-69420 Tupin et Semons (FR)
(74) Mandataire: Delenne, Marc
(86) Numéro de dépôt international: PCT/FR2005/001469
(87) Numéro de publication internationale: WO 2006/003323

(56) Documents cités:
- EP-A- 1 156 052
- FR-A- 2 843 392

## Description

La présente invention concerne un procédé de préparation d'un ω-halogénoalkyl dialkylhalogénosilane.

La présente invention concerne notamment un procédé de préparation de 3-chloropropyl diméthylchlorosilane, par hydrosilylation du diméthylhydrogénochlorsilane au moyen de chlorure d'allyle et d'un catalyseur à base d'un métal de la mine du platine et récupération dudit métal.

Dans ce type de réaction, les quantités de métal de la mine de platine engagées sont souvent élevées dans le but d'obtenir un rendement satisfaisant. Cette quantité de catalyseur métal est généralement supérieure a 30 p.p.m. calculées par rapport au poids total du mélange réactionnel. Pour que le procédé reste économiquement intéressant, il est souhaitable de pouvoir récupérer le métal de la mine du platine pour pouvoir le réutiliser comme catalyseur.

On a déjà proposé dans WO-A-2004/016628 un procédé de préparation d'un ω-halogénoalkyl dialkylhalogénosilane de formule (I) :

Hal-(R²R³)Si-(CH₂)ₛ-Hal

par réaction d'hydrosilylation d'un milieu réactionnel comportant un silane de formule (II) :

Hal-(R²R³)Si-H

et un halogénure d'alcène de formule (III) :

CH=CH-(CH₂)ₛ₋₂Hal

en présence d'une quantité catalytiquement efficace d'un catalyseur d'hydrosilylation à base d'un métal de la mine du platine, formules dans lesquelles :
- le symbole Hal représente un atome d'halogène choisi parmi les atomes de chlore, brome et iode, l'atome de chlore étant préféré,
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus,
dans lequel procédé, en fin de réaction d'hydrogénosilylation, on procède à la distillation du milieu réactionnel pour en séparer le produit de formule (I), cette distillation conduisant à un culot liquide comprenant un peu du produit formé de formule (I) non séparé par distillation, des sous-produits et le méral catalytique mis en oeuvre.

Selon l'enseignement de cet art antérieur, la récupération du métal catalytique peut être effectuée sur le culot liquide de distillation en réalisant les étapes suivantes :
- mise en contact directe du culot liquide avec une quantité efficace d'une substance solide adsorbant le métal catalytique ; ou bien mise en contact du culot liquide avec de l'eau en vue d'hydrolyser celui-ci en obtenant ainsi une phase aqueuse et une phase organique, puis traitement de la phase organique ou de l'ensemble phase aqueuse / phase organique avec une quantité efficace d'une substance solide adsorbant le métal catalytique ; et
- séparation de l'adsorbant du métal en vue de récupérer ledit métal.

La mise en contact de l'eau avec le culot de distillation permet d'inerter ce culot en transformant la totalité ou au moins la majeure partie des fonctions Si-Hal en fonctions silanols Si-OH et enchaînements siloxanes Si-O-Si suivant les réactions chimiques :

Si-Hal + H₂O → Si-OH + H-Hal

Si-OH + Si-Hal → Si-O-Si + H-Hal et Si-OH + Si-OH → Si-O-Si + H₂O

Le procédé qui vient d'être décrit n'est pas des plus économiques et il présente en plus l'inconvénient d'être écotoxique en raison de la nécessité de manipuler un culot contenant après hydrolyse une phase aqueuse ayant une teneur élevée en acidité (H-Hal), se situant par exemple dans l'intervalle pondéral allant de 40 à 50%.

Dans ce contexte, l'un des objectifs essentiels de la présente invention est de proposé un procédé de préparation d'un ω-halogénoalkyl dialkylhalogénosilane du type de celui décrit ci-avant dans lequel la cinétique réactionnelle d'hydrolyse est parfaitement sous contrôle de manière à pouvoir minimiser la quantité d'H-Hal formée présente dans la phase aqueuse d'hydrolyse.

Un autre objectif essentiel de la présente invention est de proposer un procédé de préparation d'un ω-halogénoalkyl dialkylhalogénosilane dans lequel le mode opératoire présidant à la récupération du métal catalytique est simplifié en ne faisant plus appel à l'étape d'adsorbtion du métal catalytique sur un solide adsorbant.

Un autre objectif essentiel de la présente invention est de proposer un procédé de préparation d'un ω-halogénoalkyl dialkylhalogénosilane permettant de conduire à un culot facilement manipulable et présentant un faible taux en halogénure hydrolysable Si-Hal ≤ à 2%, exprimé en poids de Hal.

Un autre objectif encore de la présente invention est de fournir un procédé de préparation d'un ω-halogénoalkyl dialkylhalogénosilane où la récupération du métal catalytique se fait à partir du culot de distillation par application des techniques classiques propres aux fabriquants de catalyseurs, mais sans faire appel maintenant à l'usage d'un quelconque solide adsorbant et en satisfaisant à tous les impératifs d'applicabilité industrielle, à savoir notamment l'absence de dangerosité du fait d'une acidité extrêmement limitée et la possibilité de fonctionnement sans avoir besoin d'uitliser des matériaux coûteux résistants aux acides.

Ces objectifs, parmi d'autres, sont atteints par la présente invention qui concerne donc un procédé de préparation d'un ω-halogénoalkyl dialkylhalogénosilane de formule (l) :

Hal-(R²R³)Si-(CH₂)ₛ-Hal

par réaction d'hydrosilylation d'un milieu réactionnel comportant un silane de formule (II) :

Hal---(R²R³)Si-H

et un halogénure d'alcène de formule (III) :

CH=CH-(CH₂)ₛ₋₂Hal

en présence d'une quantité catalytiquement efficace d'un catalyseur d'hydrosilylation à base d'un métal de la mine du platine,
formules dans lesquelles :
- le symbole Hal représente un atome d'halogène choisi parmi les atomes de chlore, brome et iode, l'atome de chlore étant préféré,
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus, ledit procédé comportant, en fin de réaction d'hydrogénosilylation, une opération de distillation du milieu réactionnel pour en séparer le produit formé de formule (1), cette distillation conduisant à un culot liquide comprenant un peu du produit formé de formule (I) non séparé par distillation, des sous-produits et le méral catalytique mis en oeuvre, puis une opération de récupération du métal catalytique à partir dudit culot,
ledit procédé étant **caractérisé en ce que,** en vue de récupérer le métal catalytique, on procéde :
• à une hydrolyse ménagée du culot issu de la distillation du milieu réactionnel comprenant le métal catalytique de la mine du platine, ledit métal se trouvant sous sa forme originale de catalyseur ou sous une forme transformée, cette hydrolyse ménagée étant mise en oeuvre selon un mode de fonctionnement particulier qui permette :
   a) la réaction avec l'eau des fonctions Si-Hal du produit de formule (I) présentes dans le culot,
   b) le dégagement de l'acide halogéné H-Hal formé essentiellement à l'état de gaz, et
   c) la mise à la disposition d'un milieu aqueux, contenant le métal catalytique, qui présente un faible taux en halogénure hydrolysable Si-Hal ≤ à 2%, exprimé en poids de Hal ;
• puis à la récupération, à partir dudit milieu aqueux, du métal catalytique de la mine du platine par application de l'une ou l'autre des techniques classiques propres au fabriquants de catalyseurs ne faisant pas appel à l'usage d'un quelconque solide adsorbant et en opérant dans un appareillage courant ne nécessistant pas d'être résistant aux acides.

Le métal de la mine du platine est choisi parmi le platine, l'iridium, le palladium, le rhodium, le ruthénium et l'osmium, le métal préféré étant l'iridium. Dans le cadre de cette disposition préférée, des catalyseurs à base d'Ir qui conviennent sont en particulier :

[IrCl(CO)(PPh₃)₂]

[Ir(CO)H(PPh₃)₃]

[Ir(C₈H₁₂)(C₅H₅N)P(C₆H₁₁)₃]PF₆

[IrCl₃],nH₂O

H₂[IrCl₆],nH₂O

(NH₄)₂IrCl₆

Na₂IrCl6

K₂IrCl₆

Klr(NO)Cl₅

[Ir(C₈H₁₂)₂]⁺BF₄⁻

[IrCl(CO)₃]ₙ

H₂IrCl₆

Ir₄(CO)₁₂

Ir(CO)₂(CH₃COCHCOCH₃)

Ir(CH₃COCHCOCH₃)

IrBr₃

IrCl₃

IrCl₄

IrO₂

(C₆H₇)(C₈H₁₂)Ir.

Dans le cadre de la disposition encore plus préférée mentionnée ci-avant, d'autres catalyseurs à base d'Ir qui conviennent encore mieux sont pris dans le groupe des complexes de l'iridium de formule :

[Ir(R⁴)Hal]₂ (IV)

où :
- le symbole R⁴ représente un ligand hydrocarboné insaturé comportant au moins une double liaison carbone=carbone et/ou au moins une triple liaison C≡C, ces liaisons insaturées pouvant être conjuguées ou non conjuguées, ledit ligant : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes comme par exemple un atome d'oxygène et/ou un atome de silicium ;
- le symbole Hal est tel que défini supra.

Comme exemple de complexes de l'iridium de formule (IV) qui conviennent encore mieux, on citera ceux dans la formule desquels :
• le symbole R⁴ est choisi parmi le butadiène-1,3, l'hexadiène-1,3, le cyclohexadiène-1,3, le cyclooctadiène-1,3, le cyclooctadiène-1,5, le cyctododécatriène-1,5,9 et le norbornadiène, et les composés suivants de formule : 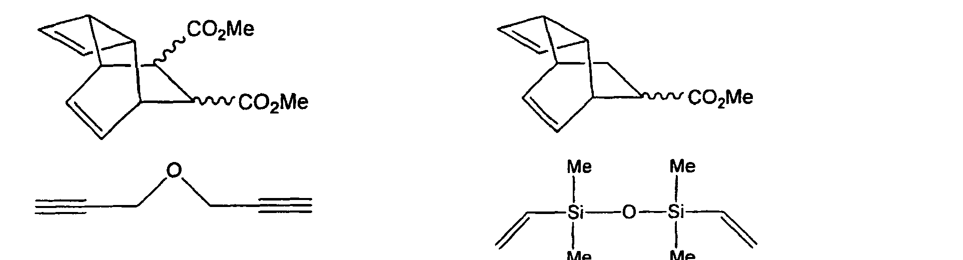 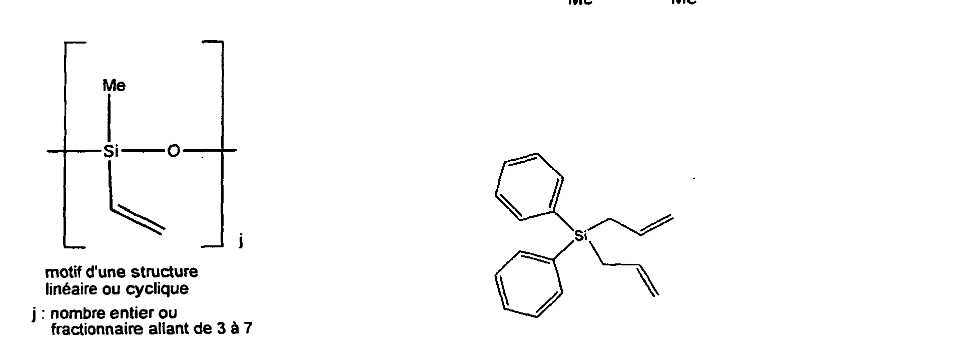 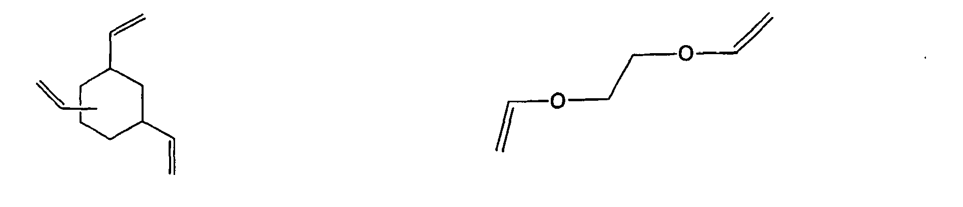
• le symbole Hal représente un atome de chlore.

A titre d'exemples spécifiques de complexes de l'iridium qui conviennent encore mieux, on citera les catalyseurs suivants :
di-µ-chlorobis(divinyltétraméthyldisiloxane)diiridium,
di-µ-chlorobis(η-1,5-hexadiene)diiridium,
di-µ-bromobis(η-1,5-hexadiene)diiridium,
di-µ-iodobis(η-1,5-hexadiene)diiridium,
di-µ-chlorobis(η-1,5-cyclooctadiene)diiridium,
di-µ-bromobis(η-1,5-cyclooctadiene)diiridium,
di-µ-iodobis(η-1,5-cyclooctadiene)diiridium,
di-µ-chlorobis(η-2,5-norbomadiene)diiridium,
di-µ-bromobis(η-2,5-norbomadiene)diiridium,
di-µ-iodobis(η-2,5-norbomadiene)diiridium.

Sans sortir du cadre de la présente invention, on peut utiliser, à côté du catalyseur à base d'un métal de la mine du platine, au moins un promoteur de réaction d'hydrosilylation.

A titre du (ou des) promoteur(s) optionnel(s) on peut citer : un composé, qui peut présenté par exemple la forme d'un ligand ou d'un composé ionique, pris en particulier dans le groupe formé par : un péroxyde organique ; un acide carboxylique ; un sel d'acide carboxylique ; une phosphine tertiaire ; un phosphite comme par exemple un phosphite éventuellement mixte d'alkyle et/ou d'aryle ; une amine ; un amide ; une cétone linéaire ou cyclique ; une cétone linéaire ou cyclique ; un trialkylhydrogénosilane ; le benzothriazole ; la phénothiazine ; un composé de type métal trivalent-(C₆H₅)₃ où métal = As, Sb ou P ; un mélange d'amine ou de cyclohexanone avec un composé organosilicique comprenant un ou plusieurs groupe(s) ≡Si-H ; les composés CH₂=CH-CH₂-OH ou CH₂=CH-CH₂-OCOCH₃ ; une lactone ; un mélange de cyclohexanone avec la triphénylphosphine ; un composé ionique comme par exemple un nitrate ou un borate de métal alcalin ou d'imidazolinium, un halogénure de phosphonium, un halogénure d'ammonium quaternaire, un halogénure d'étain II.

Le (ou les) promoteur(s) optionnel(s), quand on en utilise un (ou plusieurs), est (sont) introduit(s) généralement en début de réaction, soit dans l'état ou il(s) se trouve(nt) normalement, soit sous forme d'un pré-mélange à base de : promoteur(s) + catalyseur(s) ; ou promoteur(s) + tout ou partie du diorganohalogénosilane de formule (II) ; ou promoteur(s) + tout ou partie de l'halogénure d'alcène de formule (III).

Le catalyseur peut être utilisé, et il s'agit là d'une autre disposition préférentielle, en milieu liquide homogène, comme cela est décrit dans JP-B-2.938.731 et EP-A- 1 156 052. Dans ce cadre, la réaction peut être conduite soit de façon continue, soit de façon semi-continue, soit de façon discontinue. En fin d'opération on procède, comme indiqué ci-avant, aux récupérations du produit formé de formule (I) et du métal catalytique de la mine du platine.

La quantité d'halogénure d'alcène de formule (III) utilisée est de préférence de 1 à 2 moles pour 1 mole de silane de formule (II). Quant à la quantité de catalyseur(s) (i), exprimée en poids de métal de la mine du platine, elle se situe dans l'intervalle allant de 1 à 10 000 p.p.m., de préférence allant de 10 à 2000 p.p.m. et plus préférentiellement allant de 20 à 1000 p.p.m. basées sur le poids de silane de formule (II).

Selon la présente invention, le culot liquide de distillation est donc mis en contact avec une quantité d'eau suffisante pour transformer la totalité ou au moins la majeure partie des fonctions Si-Hal en fonctions silanols Si-OH et enchaînements siloxanes Si-O-Si.

La mise en contact du culot liquide avec l'eau sans tenir compte des préceptes de la présente invention conduit certes à l'hydrolyse de fonctions Si-Hal hydrolysables, mais l'acide halogéné H-Hal ainsi formé est alors solubilisé dans le milieu. Il est connu de l'homme de l'art des moyens simples pour détruire cet acide halogéné, par exemple par réaction chimique avec une base (par exemple NaOH) ; l'expérience que nous avons conduite montre cependant qu'en présence d'eau, d'acidité et d'une base, le culot issu de la distillation du mélange réactionnel conduit alors à la formation d'une boue difficilement manipulable.

Le culot de distillation comprend généralement une certaine proportion de l'halogénosilane de formule (I) non séparé par distillation et le disilane correspondant, ce qui conduit à des teneurs en halogène total de l'ordre de 40 à 50% en poids et en halogène ionique de l'ordre de 15 à 25% en poids. On entend par halogène total, l'ensemble des atomes d'halogéne présentes dans le culot ; on entend par halogène ionique l'ensemble des halogènes dits hydrolysables, c'est-à-dire essentiellement les fonctions Si-Hal pouvant réagir avec l'eau pour former l'acide halogéné correspondant.

II est recommandé d'effectuer l'hydrolyse en mode semi-continu en réalisant la coulée de l'eau sur le culot ; cette hydrolyse est "ménagée" en maîtrisant le débit d'introduction de l'eau pour éviter toute accumulation d'eau dans le milieu de façon à ce que l'acide H-Hal formé à chaque instant ne soit pas solubilisé dans la phase aqueuse ; en effet, l'acide halogéné H-Hal est très soluble dans l'eau et pour favoriser son départ sous forme de gaz, il convient d'ajuster le débit de coulée de l'eau de façon à être pratiquement en défaut d'eau, par rapport à la stoechiométrie correspondant à la solubilisation de l'acide, tout au long de la réaction.

La quantité d'eau utilisée est fortement liée d'une part à la capacité de dégazage de l'acide halogéné, qui est fonction de l'eau accumulée dans le milieu au cours du temps, et d'autre part aux paramètres de fonctionnement tels que par exemple la vitesse d'agitation du réacteur d'hydrolyse, la température et/ou la présence ou non d'un gaz inerte jouant le rôle de vecteur de l'acide halogéné (système du "stripping"). De manière avantageuse, le dégazage de l'acide halogéné formé est favorisé par un "stripping" à l'aide d'un gaz inerte vis à vis de l'halogénure d'hydrogène H-Hal formé et des produits composant le culot ; dans ce cas, on recommande d'utiliser l'azote ou l'argon et d'éviter la vapeur d'eau ou d'alcool qui réagissent avec les halogénosilanes.

L'hydrolyse ménagée peut être mise en oeuvre à pression atmosphérique ou sous pression réduite, et, éventuellement en présence d'un gaz inerte comme expliqué ci-avant.

De manière pratique, la quantité d'eau utilisée se situe dans l'intervalle allant de 1 à 5 moles et, de préférence, allant de 1 à 3 moles, pour 1 mole d'halogène hydrolysable (fonction Si-Hal).

De manière pratique encore, l'eau est ajoutée dans le culot de distillation à un débit qui est réglé de manière à éviter toute accumulation d'eau dans le milieu et ainsi la solubilisation de l'acide H-Hal formé à chaque instant. La valeur précise de ce débit va dépendre des caractéristiques géométriques du réacteur d'hydrolyse et aussi des conditions de "stripping" (nature du gaz inerte, débit du gaz inerte, température d'hydrolyse, vitesse agitation du réacteur) dans le cas où l'on utilise ce système de fonctionnement. L'homme de métier pourra déterminer aisément, à l'aide d'essais simples, la valeur précise du débit à mettre en oeuvre pour chaque opération.

A titre d'exemple illustratif mais non limitatif, dans le cas où l'on travaille dans un réacteur de 1 à 3 litres, contenant au moins 400 g de matières, équipé d'une agitation mécanique tournant à une vitesse allant de 200 à 600 tours par minute, soumis à un balayage de gaz inerte avec un débit allant de 10 à 50 g de gaz par heure et chauffé à une température allant de 40 à 60 °C, l'eau est ajoutée dans le culot de distillation à un débit qui se situe dans l'intervalle allant de 0,001 à 0,04 mole d'eau et, de préférence, allant de 0,002 à 0,015 mole d'eau par minute et par mole d'halogène hydrolysable.

Dans le cas où l'hydrolyse est conduite sur le culot de distillation de façon non ménagée, l'acide halogéné formé est alors en partie ou totalement solubilisé dans le milieu et on conserve donc un taux d'halogène ionique supérieure à 15% en poids. Pareille conduite du procédé conduit à la formation d'une phase aqueuse et d'une phase organique avec une répartition équimassique du catalyseur métallique entre ces deux phases ; cette voie permet certes de réaliser ainsi l'objectif d'inerter le culot réactif, mais elle conduit au cours du temps à la formation d'une boue difficilement manipulable, incompatible avec un procédé fiable et reproductif ; de plus, cette voie pose le problème des analyses qualitative et quantitative du métal catalytique.

L'hydrolyse aménagée peut se faire à des températures allant de 0°C à 100°C à la pression atmosphérique. La réaction étant exothermique, on préfère réaliser la coulée de l'eau à des températures modérées allant de 10 à 80°C. Un contrôle de la température peut s'avérer nécessaire. En fin de coulée de l'eau sur le culot, le milieu obtenu est monophasique et constitué d'une phase organique comprenant le métal catalytique à récupérer.

Préférentiellement le produit de formule (I) est le 3-chloropropyl diméthylchlorosilane, le produit de formule (II) est le diméthylhydrogénochlorosilane et le produit de formule (III) est le chlorure d'allyle . Dans ce cas l'halogénure d'hydrogène formé H-Hal est HCl.

Les exemples suivants illustrent l'invention sans en limiter la portée.

Dans les exemples ci-dessous on réalise tout d'abord une réaction d'hydrosilylation du diméthylhydrogénochlorosilane sur du chlorure d'allyle en présence de 500 p.p.m. de di-µ-chlorobis(η-1,5-cyclooctadiene)diiridium par rapport au poids de diméthylhydrogénochlorosilane. Dans un réacteur muni d'un agitateur **,** d'un condenseur à reflux et d'un thermomètre. Le diméthylhydrogénochlorosilane est ajouté goutte à goutte au milieu réactionnel pendant 7 heures à une température de 38°C. Le milieu final ainsi obtenu constitue le milieu réactionnel qui est traité dans certains des exemples suivants. Le 3-chloropropyldiméthylchlorosilane est séparé du milieu réactionnel par distillation et il reste un culot liquide de distillation comprenant le catalyseur ; c'est ce culot de distillation qui est traité dans les exemples suivants.

### Exemple 1 :

### Hydrolyse ménagée du culot pour descendre sous la teneur limite de 2% en poids de chlore ionique :

Dans un réacteur d'un litre équipé d'une agitation mécanique (agitateur de type tri-pales tournant à 400 tours/min) et sous balayage d'argon (débit de 14 g/h), sont introduits 400 g de culot de distillation contenant 1,2 % en poids d'iridium. La teneur en chlore hydrolysable est de 20 % en poids, correspondant à 2,25 moles. Le milieu réactionnel est agité et chauffé à 50°C.

120 g d'eau sont introduits à un débit de 0,400 g/min, soit 0.009 mole d'eau par minute et par mole de chlore hydrolysable.

Les conditions de température sont maintenues tout au long de l'essai. L'acide chlorohydrique libéré sous forme de gaz est piégé dans une colonne d'abatage où circule un flux de soude diluée à 30% en poids dans l'eau. Le milieu final est récupéré et on analyse le chlore ionique : la teneur finale est de 0,13% en poids.

Pour cette expérience, le ratio molaire eau/chlore hydrolysable est égal à 2,96.

### Exemple 2 :

### Hydrolyse ménagée du culot pour descendre sous la teneur limite de 2% en poids de chlore ionique:

Dans un réacteur d'un litre équipé d'une agitation mécanique (agitateur de type tri-pales tournant à 400 tours/min) et sous balayage d'argon (débit de 14 g/h), sont introduits 800 g de culot de distillation identique à celui utilisé à l'exemple 1 et contenant 1,2% en poids d'iridium. Le milieu réactionnel est agité et chauffé à 50°C. La teneur en chlore hydrolysable est de 4,5 moles.

160 g d'eau sont alors introduits à un débit de 0,5 g/min soit 0,006 mole d'eau par minute et par mole de chlore hydrolysable et les conditions de température sont maintenues 1 heure. Le milieu final est récupéré et on analyse le chlore ionique : la teneur finale est de 0,30% en poids.

Pour cette expérience, le ratio molaire eau/chlore hydrolysable est de 1,97.

### Exemple comparatif :

### Hydrolyse du culot ne permettant pas de descendre sous la teneur limite de 2% en poids de chlore ionique:

Dans un réacteur d'un litre équipé d'une agitation mécanique (agitateur de type tri-pales tournant à 400 tours/min) et sous balayage d'argon (débit de 14 g/h), sont introduits 800 g de culot de distillation identique à celui utilisé à l'exemple 1 et contenant 1,2% en poids d'iridium. Le milieu réactionnel est agité et chauffé à 50°C. La teneur en chlore hydrolysable est de 4,5 moles.

160 g d'eau sont alors introduits à un débit de 5 g/min soit 0,06 mole d'eau par minute et par mole de chlore hydrolysable. Les conditions de température sont maintenues 1 heure. Le milieu final est récupéré et on analyse le chlore ionique : la teneur finale est de 4,30% en poids.

Pour cette expérience, le ratio molaire eau/chlore hydrolysable est de 1,97.

## Revendications

1. Procédé de préparation d'un ω-halogénoalkyl dialkylhalogénosilane de formule (I) :
Hal-(R²R³)Si-(CH₂)ₛ-Hal
par réaction d'hydrosilylation d'un milieu réactionnel comportant un silane de formule (II) :
Hal-(R²R³)Si-H
et un halogénure d'alcène de formule (III) :
CH=CH-(CH₂)ₛ₋₂Hal
en présence d'une quantité catalytiquement efficace d'un catalyseur d'hydrosilylation à base d'un métal de la mine du platine,
formules dans lesquelles :
- le symbole Hal représente un atome d'halogène choisi parmi les atomes de chlore, brome et iode, l'atome de chlore étant préféré,
- les symboles R² et R³, identiques ou différentes, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus,
ledit procédé comportant, en fin de réaction d'hydrogénosilylation, une opération de distillation du milieu réactionnel pour en séparer le produit formé de formule (I), cette distillation conduisant à un culot liquide comprenant du produit formé de formule (I) non séparé par distillation, des sous-produits et le méral catalytique mis en oeuvre, puis une opération de récupération du métal catalytique à partir dudit culot,
ledit procédé étant **caractérisé en ce que,** en vue de récupérer le métal catalytique, on procéde :
• à une hydrolyse ménagée du culot issu de la distillation du milieu réactionnel comprenant le métal catalytique de la mine du platine, ledit métal se trouvant sous sa forme originale de catalyseur ou sous une forme transformée, cette hydrolyse ménagée étant mise en oeuvre selon un mode de fonctionnement particulier qui permette :
a) la réaction avec l'eau des fonctions Si-Hal du produit de formule (I) présentes dans le culot,
b) le dégagement de l'acide halogéné H-Hal formé essentiellement à l'état de gaz, et
c) la mise à la disposition d'un milieu aqueux, contenant le métal catalytique, qui présente un faible taux en halogénure hydrolysable Si-Hal ≤ à 2%, exprimé en poids de Hal ;
• puis à la récupération, à partir dudit milieu aqueux, du métal catalytique de la mine du platine par application de l'une ou l'autre des techniques classiques propres au fabriquants de catalyseurs ne faisant pas appel à l'usage d'un quelconque solide adsorbant et en opérant dans un appareillage courant ne nécessistant pas d'être résistant aux acides.

2. Procédé selon la revendication 1, **caractérisé en ce que** le métal de la mine du platine est choisi parmi le platine l'iridium, le palladium, le ruthénium et l'osmium.

3. Procédé selon la revendication 1 ou 2, **caractérisé en ce que** s est égal à trois et le métal de la mine du platine est l'iridium.

4. Procédé selon la revendication 3, **caractérisé en ce que** le catalyseur répond à la formule:
[Ir(R⁴)Hal]₂ (IV)
où :
- le symbole R⁴ représente un ligand hydrocarboné insaturé comportant au moins une double liaison carbone=carbone et/ou au moins une triple liaison C≡C, ces liaisons insaturées pouvant être conjuguées ou non conjuguées, ledit ligant : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes.

5. Procédé selon la revendication 4, **caractérisé en ce que** le catalyseur est choisi parmi :
di-µ-chlorobis(divinyltétraméthyldisiloxane)diiridium,
di-µ-chlorobis(η-1,5-hexadiene)diiridium,
di-µ-bromobis(η-1,5-hexadiene)diiridium,
di-µ-iodobis(η-1,5-hexadiene)diiridium,
di-µ-chlorobis(η-1,5-cyclooctadiene)diiridium,
di-µ-bromobis(η-1,5-cyclooctadiene)diiridium,
di-µ-iodobis(η-1,5-cyclooctadiene)diiridium,
di-µ-chlorobis(η-2,5-norbornadiene)diiridium,
di-µ-bromobis(η-2,5-norbornadiene)diiridium, ou
di-µ-iodobis(η-2,5-norbomadiene)diiridium.

6. Procédé selon les revendications 4 ou 5, **caractérisé en ce que** la teneur en catalyseur calculé en poids de catalyseur métal est supérieur a 30 p.p.m. calculées par rapport au poids total du mélange réactionnel formé par les produits de formule (I), (II) et (III).

7. Procédé selon l'une quelconque des revendications 1 à 6, **caractérisé en ce que** l'hydrolyse est effectuée en mode semi-continu en réalisant la coulée de l'eau sur le culot et en maîtrisant le débit d'introduction de l'eau pour éviter toute accumulation d'eau dans le milieu de façon à ce que l'acide H-Hal formé à chaque instant ne soit pas solubilisé dans la phase aqueuse

8. Procédé selon l'une quelconque des revendications 1 à 7, **caractérisé en ce que** le dégazage de l'acide halogéné formé est favorisé par un "stripping" à l'aide d'un gaz inerte vis à vis de l'halogénure d'hydrogène H-Hal formé et des produits composant le culot.

9. Procédé selon l'une quelconque des revendications 1 à 8, **caractérisé en ce** la quantité d'eau utilisée se situe dans l'intervalle allant de 1 à 5 moles pour 1 mole d'halogène hydrolysable.

10. Procédé selon l'une quelconque des revendications 1 à 9, **caractérisé en ce que** le produit de formule (I) est le 3-chloropropyl diméthylchlorosilane, le produit de formule (II) est le diméthylhydrogénochlorosilane et le produit de formule (III) est le chlorure d'allyle.

## Claims

1. A method for preparing an ω-haloalkyl dialkylhalosilane of formula (I):
Hal-(R²R³)Si-(CH₂)ₛ-Hal
by a reaction of hydrosilylation of a reaction mixture comprising a silane of formula (II):
Hal-(R²R³)Si-H
and an alkene halide of formula (III):
CH=CH- (CH₂)ₛ₋₂Hal
in the presence of a catalytically effective amount of a hydrosilylation catalyst based on a platinum metal,
and in the above formulae:
- the symbol Hal represents a halogen atom selected from the atoms of chlorine, bromine and iodine, the chlorine atom being preferred,
- the symbols R² and R³, which may be identical or different, each represent a monovalent hydrocarbon group selected from a linear or branched alkyl radical having from 1 to 6 carbon atoms and a phenyl radical, and
- s represents an integer between 2 and 10 inclusive,
said process comprising, at the end of the hydrosilylation reaction, an operation of distillation of the reaction mixture in order to separate the product formed of formula (I) from it, this distillation leading to a liquid residue comprising some product formed of formula (I) that was not separated by distillation, by-products and the catalytic metal employed, then an operation of recovery of the catalytic metal from said residue,
said method being **characterized in that** the following are carried out for recovering the catalytic metal:
• controlled hydrolysis of the residue resulting from distillation of the reaction mixture containing the catalytic platinum metal, said metal being in its original form as catalyst or in a converted form, this controlled hydrolysis being employed according to a particular procedure that permits:
a) reaction, with water, of the Si-Hal functions of the product of formula (I) present in the residue,
b) release of the halogen-containing acid H-Hal formed essentially in the gaseous state, and
c) the provision of an aqueous medium containing the catalytic metal, which has a low content of hydrolyzable halide Si-Hal ≤ 2%, expressed by weight of Hal;
• then recovery, from said aqueous medium, of the catalytic platinum metal by application of one or other of the conventional techniques familiar to catalyst manufacturers without the need to use any adsorbent solid and working in an ordinary apparatus that does not need to be acid-resistant.

2. The method as claimed in claim 1, **characterized in that** the platinum metal is selected from platinum, iridium, palladium, ruthenium and osmium.

3. The method as claimed in claim 1 or 2, **characterized in that** s is equal to three and the platinum metal is iridium.

4. The method as claimed in claim 3, **characterized in that** the catalyst corresponds to the formula:
[Ir(R⁴)Hal]₂ (IV)
in which:
- the symbol R⁴ represents an unsaturated hydrocarbon ligand comprising at least one carbon=carbon double bond and/or at least one C≡C triple bond, it being possible for these unsaturated bonds to be conjugated or unconjugated, said ligand: being linear or cyclic (mono- or polycyclic), having from 4 to 30 carbon atoms, having from 1 to 8 ethylenic and/or acetylenic unsaturations and optionally comprising one or more heteroatoms.

5. The method as claimed in claim 4, **characterized in that** the catalyst is selected from:
di-µ-chlorobis(divinyltetramethyldisiloxane-diiridium,
di-µ-chlorobis(η-1,5-hexadiene)diiridium,
di-µ-bromobis(η-1,5-hexadiene)diiridium,
di-µ-iodobis(η-1,5-hexadiene)diiridium,
di-µ-chlorobis(η-1,5-cyclooctadiene)diiridium,
di-µ-bromobis(η-1,5-cyclooctadiene)diiridium,
di-µ-iodobis(η-1,5-cyclooctadiene)diiridium,
di-µ-chlorobis(η-2,5-norbornadiene)diiridium,
di-µ-bromobis(η-2,5-norbornadiene)diiridium, or
di-µ-iodobis(η-2,5-norbornadiene)diiridium.

6. The method as claimed in claims 4 or 5, **characterized in that** the catalyst content calculated as weight of metallic catalyst is greater than 30 ppm calculated relative to the total weight of the reaction mixture formed by the products of formula (I), (II) and (III).

7. The method as claimed in any one of claims 1 to 6, **characterized in that** hydrolysis is carried out in semi-continuous mode, pouring the water onto the residue and controlling the water feed rate in order to avoid any accumulation of water in the medium so that the H-Hal acid formed at any moment is not dissolved in the aqueous phase.

8. The method as claimed in any one of claims 1 to 7, **characterized in that** degassing of the halogen-containing acid formed is promoted by stripping using a gas that is inert with respect to the hydrogen halide H-Hal formed and the products making up the residue.

9. The method as claimed in any one of claims 1 to 8, **characterized in that** the amount of water used is in the range from 1 to 5 mol per 1 mol of hydrolyzable halogen.

10. The method as claimed in any one of claims 1 to 9, **characterized in that** the product of formula (I) is 3-chloropropyl dimethylchlorosilane, the product of formula (II) is dimethyl hydrochlorosilane and the product of formula (III) is allyl chloride.

## Patentansprüche

1. Verfahren zur Herstellung eines ω-Halogenalkyldialkylhalogensilans der Formel (I):
Hal-(R²R³)Si-(CH₂)ₐ-Hal,
durch Hydrosilylierungsreaktion eines Reaktionsmediums, umfassend ein Silan der Formel (II):
Hal-(R²R³)Si-H
und ein Alkenhalogenid der Formel (III):
CH=CH-(CH₂)ₛ₋₂Hal,
in Gegenwart einer katalytisch wirksamen Menge eines Hydrosilylierungskatalysators auf der Grundlage eines Metalls der Platingruppe,
in welchen Formeln:
- das Symbol Hal für ein Halogenatom, welches unter den Chlor-, Brom- und Iodatomen ausgewählt ist, steht, wobei das Chloratom bevorzugt ist,
- die Symbole R² und R³, die gleich oder voneinander verschieden sind, jeweils für eine einwertige Kohlenwasserstoffgruppe, die unter einem linearen oder verzweigten Alkylrest mit 1 bis 6 Kohlenstoffatomen und einem Phenylrest ausgewählt ist, stehen und
- s für eine ganze Zahl zwischen 2 und 10 einschließlich steht,
wobei das Verfahren am Ende der Hydrosilylierungsreaktion einen Destillationsvorgang des Reaktionsmediums, um davon das gebildete Produkt der Formel (I) abzutrennen, wobei diese Destillation zu einem flüssigen Rückstand führt, welcher gebildetes Produkt der Formel (I), das durch Destillation nicht abgetrennt worden ist, Nebenprodukte und das eingesetzte katalytische Metall umfasst, dann einen Rückgewinnungsvorgang des katalytischen Metalls ausgehend von dem Rückstand umfasst, wobei das Verfahren **dadurch gekennzeichnet ist, dass** man in Hinblick darauf, das katalytische Metall zurückzugewinnen, ausführt:
• eine schonend ausgeführte Hydrolyse des aus der Destillation des Reaktionsmediums stammenden Rückstands, welcher das katalytische Metall der Platingruppe umfasst, wobei das Metall sich in seiner ursprünglichen Katalysatorform oder in einer umgewandelten Form befindet, wobei diese schonend ausgeführte Hydrolyse gemäß einer besonderen Funktionsweise ausgeführt wird, welche erlaubt:
a) die Umsetzung der Funktionen Si-Hal des Produkts der Formel (I), die in dem Rückstand vorhanden sind, mit Wasser,
b) die Freisetzung der gebildeten halogenhaltigen Säure H-Hal im Wesentlichen im Gaszustand und
c) das Zurverfügungstellen eines wässrigen Mediums, welches das katalytische Metall enthält, das einen geringen Gehalt an hydrolysierbarem Halogenid Si-Hal ≤ 2%, ausgedrückt bezogen auf das Gewicht von Hal, aufweist;
• dann die Rückgewinnung des katalytischen Metalls der Platingruppe ausgehend von dem wässrigen Medium durch Anwendung der einen oder einer anderen der klassischen Techniken, die für die Hersteller von Katalysatoren charakteristisch sind, wobei nicht auf die Verwendung von irgendeinem adsorbierenden Feststoff zurückgegriffen wird und indem in einer üblichen Apparatur, welche nicht erfordert, dass sie gegenüber Säuren beständig ist, gearbeitet wird.

2. Verfahren nach Anspruch 1, **dadurch gekennzeichnet, dass** das Metall der Platingruppe unter Platin, Iridium, Palladium, Ruthenium und Osmium ausgewählt ist.

3. Verfahren nach Anspruch 1 oder 2, **dadurch gekennzeichnet, dass** s gleich 3 ist und das Metall der Platingruppe Iridium ist.

4. Verfahren nach Anspruch 3, **dadurch gekennzeichnet, dass** der Katalysator der Formel:
[Ir(R⁴)Hal]₂ (IV)
entspricht,
worin:
- das Symbol R⁴ für einen ungesättigten kohlenwasserstoffhaltigen Liganden, welcher mindestens eine Kohlenstoff=Kohlenstoff-Doppelbindung und/oder mindestens eine C≡C-Dreifachbindung umfasst, steht, wobei diese ungesättigten Bindungen konjugiert oder nicht konjugiert sein können, wobei der Ligand: linear oder cyclisch (mono- oder polycyclisch) ist, 4 bis 30 Kohlenstoffatome aufweist, 1 bis 8 ethylenische und/oder acetylenische Ungesättigtheiten aufweist und gegebenenfalls ein oder mehrere Heteroatome umfasst.

5. Verfahren nach Anspruch 4, **dadurch gekennzeichnet, dass** der Katalysator unter:
Di-µ-chlorbis(divinyltetramethyldisiloxan)diiridium,
Di-µ-chlorbis(η-1,5-hexadien)diiridium,
Di-µ-brombis(η-1,5-hexadien)diiridium,
Di-µ-iodbis(η-1,5-hexadien)diiridium,
Di-µ-chlorbis(η-1,5-cyclooctadien)diiridium,
Di-µ-brombis(η-1,5-cyclooctadien)diiridium,
Di-µ-iodbis(η-1,5-cyclooctadien)diiridium;
Di-µ-chlorbis(η-2,5-norbomadien)diiridium,
Di-µ-brombis(η-2,5-norbornadien)diiridium oder
Di-µ-iodbis(η-2,5-norbornadien)diiridium
ausgewählt ist.

6. Verfahren nach den Ansprüchen 4 oder 5, **dadurch gekennzeichnet, dass** der Gehalt an Katalysator, berechnet bezogen auf das Gewicht von Metallkatalysator, höher als 30 p.p.m., berechnet bezogen auf das Gesamtgewicht der Reaktionsmischung, die durch die Produkte der Formel (I), (II) und (III) gebildet wird, ist.

7. Verfahren nach einem der Ansprüche 1 bis 6, **dadurch gekennzeichnet, dass** die Hydrolyse in einer halbkontinuierlichen Weise ausgeführt wird, indem man ein Gießen des Wassers auf den Rückstand ausführt und indem man die Einspeismenge des Wassers steuert, um eine jegliche Anhäufung von Wasser in dem Medium zu vermeiden, so dass die gebildete Säure H-Hal zu jedem Zeitpunkt nicht in der wässrigen Phase solubilisiert wird.

8. Verfahren nach einem der Ansprüche 1 bis 7, **dadurch gekennzeichnet, dass** die Entgasung der gebildeten halogenhaltigen Säure durch ein "Strippen" mit Hilfe eines gegenüber der gebildeten Halogenwasserstoffsäure H-Hal und den Produkten, die den Rückstand bilden, inerten Gases begünstigt wird.

9. Verfahren nach einem der Ansprüche 1 bis 8, **dadurch gekennzeichnet, dass** die eingesetzte Menge von Wasser in dem Bereich, welcher von 1 bis 5 Mole pro 1 Mol von hydrolysierbarem Halogen geht, liegt.

10. Verfahren nach einem der Ansprüche 1 bis 9, **dadurch gekennzeichnet, dass** das Produkt der Formel (I) 3-Chlorpropyldimethylchlorsilan ist, das Produkt der Formel (II) Dimethylhydrogenchlorsilan ist und das Produkt der Formel (III) Allylchlorid ist.
